(19) Europäisches Patentamt
European Patent Office
Office européen des brevets

(11) EP 4 796 277 A1

(12) **EUROPEAN PATENT APPLICATION**
published in accordance with Art. 153(4) EPC

(43) Date of publication:
**26.08.2026 Bulletin 2026/35**

(21) Application number: **24879691.4**

(22) Date of filing: **15.10.2024**

(51) International Patent Classification (IPC):
***B29B 17/02*** (2006.01) ***C08J 11/16*** (2006.01)
***C09J 7/38*** (2018.01) ***C09J 133/04*** (2006.01)

(52) Cooperative Patent Classification (CPC):
**B29B 17/02; C08J 11/16; C09J 7/38; C09J 133/04;**
Y02W 30/62

(86) International application number:
**PCT/JP2024/036598**

(87) International publication number:
**WO 2025/084266 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.10.2023 JP 2023178057**

(71) Applicant: **Nitto Denko Corporation**
**Ibaraki-shi, Osaka 567-8680 (JP)**

(72) Inventors:
- **YAMADA, Yosuke**
  **Ibaraki-shi, Osaka 567-8680 (JP)**
- **KOTANI, Chihiro**
  **Ibaraki-shi, Osaka 567-8680 (JP)**
- **OJI, Katsunari**
  **Ibaraki-shi, Osaka 567-8680 (JP)**
- **YAMAMOTO, Akiyoshi**
  **Ibaraki-shi, Osaka 567-8680 (JP)**
- **KAWATAKE, Fumika**
  **Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

# (54) METHOD FOR RECYCLING LAMINATE

(57) Provided is a recycling method by which, from a laminate including a functional layer and a substrate, both a resin derived from the functional layer and a resin derived from the substrate can be recovered easily and efficiently, the recycling method reducing environmental impact.

A laminate recycling method according to an embodiment of the present invention is a recycling method for recovering, from a laminate including a functional layer and a substrate, a resin derived from the functional layer and a resin derived from the substrate, and the laminate and the alkali compound are brought into contact with each other in a solid state.

EP 4 796 277 A1

## Description

TECHNICAL FIELD

The present invention relates to a laminate recycling method.

BACKGROUND ART

A large quantity of pressure-sensitive adhesive tape is used for putting labels or the like on articles and wrapping materials, for packing with packing materials, in manufacturing process of electrical parts or optical parts, for masking, etc. An amount of pressure-sensitive adhesive tape used in manufacturing process of electrical parts or optical parts has been increasing particularly in recent years, and a large amount of waste of pressure-sensitive adhesive tape is produced at, for example, manufacturing sites.

Waste of pressure-sensitive adhesive tape is commonly disposed of by incineration or brought to waste disposal facilities and disposed of. However, such disposal is not preferred from the viewpoint of environmental load reduction and resource circulation.

In view of the above circumstances, it is necessary to reduce such disposal of waste of pressure-sensitive adhesive tape as much as possible and reuse resources. Recycling of pressure-sensitive adhesive tape materials is one possible means of reducing disposal of pressure-sensitive adhesive tape. Establishment of a technology of recycling pressure-sensitive adhesive tape materials is conducive to, for example, reduction of $CO_2$ emissions from fossil resource extraction, and can also be very effective in terms of solving the climate change problem.

Pressure-sensitive adhesive materials are typically pressure-sensitive adhesives and substrates. A pressure-sensitive adhesive tape is obtained typically by dissolving a polymer (which may be referred to as "base polymer") and an additive, such as a crosslinking agent, suitable for the purpose in a solvent to give a pressure-sensitive adhesive composition, applying the pressure-sensitive adhesive composition to a substrate, and allowing a crosslinking reaction to progress by heating, drying, or the like, as necessary, to produce a pressure-sensitive adhesive on the substrate (e.g., Patent Literature 1).

As a technique relating to recycling of pressure-sensitive adhesive tape, a method for removing a functional layer, such as a pressure-sensitive adhesive layer, from a substrate film including the functional layer has been reported (Patent Literature 2). This method involves bringing a long continuous substrate film wound in roll form into contact with an alkaline treatment solution in an alkali treatment tank, and is reported to be characterized by bringing the substrate film in a long continuous state rather than in a pulverized state into contact with the alkaline treatment solution in the alkali treatment tank. However, this technique is not intended to recycle the functional layer, but to recover the substrate film from which the functional layer has been removed. That is, the technique has not been completed as a recycling system capable of recovering and recycling both the functional layer and the substrate film. Furthermore, since the alkaline treatment solution used is an aqueous solution, the removal effect on functional layers having low compatibility with water is low.

A method for washing a laminated polyester film having a functional layer on a surface of a polyester film with a treatment solution containing an alkaline agent and an alcohol to remove the functional layer and then recovering the polyester film from which the functional layer has been removed has been reported as another technique relating to recycling of pressure-sensitive adhesive tape (Patent Literature 3). In this method, compatibility between the treatment solution and the functional layer having low compatibility with water is improved by inclusion of the organic solvent in the treatment solution. However, from the viewpoint of environmental impact, such as emissions of $CO_2$ derived from the organic solvent, there remains room for improvement as a recycling technique. Moreover, this technique is also not intended to recycle the functional layer, but to recover the polyester film from which the functional layer has been removed. That is, the technique has not been completed as a recycling system capable of recovering and recycling both the functional layer and the polyester film.

CITATION LIST

Patent Literature

Patent Literature 1: JP 2021-175796 A
Patent Literature 2: JP 2020-090094 A
Patent Literature 3: JP 2021-160350 A

SUMMARY OF INVENTION

Technical Problem

An object of the present invention is to provide a recycling method by which, from a laminate including a functional layer and a substrate, both a resin derived from the functional layer and a resin derived from the substrate can be recovered easily and efficiently, the recycling method reducing environmental impact.

Solution to Problem

As a result of conducting intensive studies to achieve the above object, the present inventors focused on a physical approach. The present inventors have found that the above object can be achieved by bringing a laminate including a functional layer and a substrate and an alkali compound into contact with each other in a solid state.

As described above, by bringing a laminate including a functional layer and a substrate and an alkali compound into contact with each other in a solid state, the probability that a reaction site in the decomposition reaction of the functional layer will encounter the alkali compound can be physically increased, and the alkali compound at a high concentration comes into direct contact with the reaction site in the decomposition reaction of the functional layer. It has been found that, as a result, the decomposition reaction of the functional layer proceeds efficiently and separation from the substrate is also promoted, and both a resin derived from the functional layer and a resin derived from the substrate can be easily recovered from the laminate including the functional layer and the substrate without a plurality of complicated steps.

Focusing on the functional layer, it has also been found that, by bringing the alkali compound in a solid state into contact therewith, the decomposition reaction of the functional layer proceeds efficiently, thereby dramatically shortening the time required for the decomposition reaction of the functional layer. Moreover, it has been confirmed that, for example, when the functional layer is formed of an acrylic pressure-sensitive adhesive, a hydrophilic polymer is obtained as a recycled acrylic polymer in a high yield and a highly pure alcohol is obtained in a high yield by recovery (preferably, recovery under reduced pressure) of an alcohol generated together with the hydrophilic polymer. Furthermore, it has been confirmed that, by forced recovery (preferably, recovery under reduced pressure) of the alcohol, a saponification reaction, which is an equilibrium reaction, is driven toward hydrophilic polymer generation according to Le Chatelier's principle, thereby further increasing the yield of the hydrophilic polymer as a recycled acrylic polymer.

On the other hand, focusing on the substrate, it has been found that when the alkali compound in a solid state comes into direct contact with the substrate, the resin forming the substrate may be partially decomposed due to the direct contact with the highly concentrated alkali compound. This can decrease the recovery rate of the resin derived from the substrate. Therefore, the present inventors conducted studies on a method capable of achieving both efficient progression of the decomposition reaction of the functional layer and suppression of decomposition of the resin forming the substrate. As a result of studies focusing on a solvent having high affinity for the functional layer and low affinity for the resin forming the substrate, it was found that, both the resin derived from the functional layer and the resin derived from the substrate can be recovered more efficiently by adding an organic solvent as appropriate to a mixture including the laminate and the alkali compound after contact between the laminate and the alkali compound in a solid state.

[1] A laminate recycling method according to an embodiment of the present invention is a recycling method for recovering, from a laminate including a functional layer and a substrate, a resin derived from the functional layer and a resin derived from the substrate, wherein the laminate and an alkali compound are brought into contact with each other in a solid state.

[2] In the laminate recycling method according to [1], an organic solvent may be added to a mixture including the laminate and the alkali compound after the contact.

[3] In the laminate recycling method according to [1] or [2], the organic solvent may be an alcohol.

[4] In the laminate recycling method according to any one of [1] to [3], kneading of a mixture including the laminate and the alkali compound may be performed.

[5] In the laminate recycling method according to [4], the kneading may be performed using a kneading device configured to knead the mixture including the laminate and the alkali compound by applying a shear force to the mixture.

[6] In the laminate recycling method according to [5], the kneading device may include a stirring blade and a reactor, and a ratio B1/D1 of a diameter B1 (mm) of the stirring blade to a diameter R1 (mm) of the reactor may be 0.5 or more.

[7] In the laminate recycling method according to any one of [4] to [6], the kneading may be at least partially performed under reduced pressure.

[8] The laminate recycling method according to any one of [1] to [7] may include a separation step of separating the resin derived from the functional layer and the resin derived from the substrate.

[9] In the laminate recycling method according to [8], the separation step may perform separation using a filter, 90 wt% or more of the resin derived from the functional layer may pass through the filter, and 90 wt% or more of the resin derived from the substrate may not pass through the filter.

[10] In the laminate recycling method according to [8], the separation step may perform separation using solubility in a liquid, 90 wt% or more of the resin derived from the functional layer may dissolve in the liquid, and 90 wt% or more of the resin derived from the substrate may not dissolve in the liquid.
[11] In the laminate recycling method according to any one of [1] to [10], the functional layer may be formed of an acrylic pressure-sensitive adhesive, and the resin derived from the functional layer may be a hydrophilic polymer.
[12] In the laminate recycling method according to any one of [4] to [11], an alcohol may be generated in the kneading.
[13] The laminate recycling method according to [12] may include an alcohol recovery step of recovering the alcohol generated in the kneading.
[14] In the laminate recycling method according to [13], the alcohol recovery step may recover, under reduced pressure, the alcohol generated in the kneading.

Advantageous Effects of Invention

According to an embodiment of the present invention, a recycling method by which, from a laminate including a functional layer and a substrate, both a resin derived from the functional layer and a resin derived from the substrate can be recovered easily and efficiently can be provided, the recycling method reducing environmental impact.

DESCRIPTION OF EMBODIMENTS

Herein, the term "weight" may be interpreted as "mass" which is commonly used as an SI unit for weight.
Herein, the term "(meth)acrylic" means "acrylic and/or methacrylic", the term "(meth)acrylate" means "acrylate and/or methacrylate", the term "(meth)allyl" means "allyl and/or methallyl", and the term "(meth)acrolein" means "acrolein and/or methacrolein."

««1. Laminate Recycling Method»»

A laminate recycling method according to an embodiment of the present invention is a recycling method for recovering, from a laminate including a functional layer and a substrate, a resin derived from the functional layer and a resin derived from the substrate, and the laminate and the alkali compound are brought into contact with each other in a solid state.
Examples of the resin derived from the functional layer include a resin included in the functional layer and a resin that can be a raw material for forming the resin included in the functional layer.
Examples of the resin derived from the substrate include a resin included in the substrate and a resin that can be a raw material for forming the resin included in the substrate.
In the laminate recycling method according to the embodiment of the present invention, the laminate and the alkali compound are brought into contact with each other in a solid state. It should be noted that unintended and unavoidable coexistence of a liquid at the time of the contact is encompassed within the above "solid state." For example, coexistence of moisture due to ingress of humidity from a reaction atmosphere and coexistence of moisture unavoidably contained in the alkali compound that is solid (for example, coexistence of moisture that may be contained in solid potassium hydroxide or solid sodium hydroxide) are encompassed within the above "solid state." As for the laminate, coexistence of a liquid, such as a residual solvent, that may be originally contained in the laminate to the extent the liquid does not impair the solid state of the laminate is also encompassed within the above "solid state."
To bring the laminate and the alkali compound into contact with each other, an appropriate method can be adopted as long as the effect of the present invention is not impaired. Examples of the method include bringing the laminate that is solid and, as necessary, pulverized and the alkali compound that is solid into contact with each other in an appropriate reactor (such as a kneading machine described later).
To achieve the contact between the laminate and the alkali compound, at least a portion of the laminate used and at least a portion of the alkali compound used are required to come into contact. The contact between the laminate and the alkali compound is typically, as described later, a state achieved by charging the laminate and the alkali compound into a kneading machine and kneading them.
An amount of the alkali compound used with respect to the laminate may be set as appropriate according to a constituent material and the type of the laminate.
In the laminate recycling method according to the embodiment of the present invention, an organic solvent may be added after the contact between the laminate and the alkali compound. The organic solvent can be added at any appropriate timing after the contact between the laminate and the alkali compound, as long as the effect of the present invention is not impaired. The organic solvent may be added during kneading of a mixture including the laminate and the alkali compound or when a mixture including the laminate and the alkali compound is not being kneaded.
The organic solvent may be composed of only one organic solvent, or may be composed of two or more organic

solvents.

An appropriate organic solvent can be adopted as the organic solvent as long as the effect of the present invention is not impaired. Examples of the organic solvent include alcohols, and typical examples thereof include primary to tertiary alcohols having 1 to 20 (preferably 1 to 10) carbon atoms.

Examples of the primary to tertiary alcohols having 1 to 20 (preferably 1 to 10) carbon atoms include methanol, ethanol, 1-propanol, 2-propanol, 1-butanol, 2-butanol, tert-butanol, 1-pentanol, 1-hexanol, cyclohexanol, 2-ethylbutanol, 1-octanol, 2-ethylhexanol, benzyl alcohol, diethylene glycol, dipropylene glycol, propylene glycol monopropyl ether, and propylene glycol monoethyl ether.

Other examples of the organic solvent include: hydrocarbons, such as benzene, toluene, styrene, hexane, cyclohexane, and methylcyclohexane; ketones, such as acetone; esters, such as ethyl acetate; ethers, such as tetrahydrofuran and cyclopentyl methyl ether; nitriles, such as acetonitrile; amines, such as aniline; carboxylic acids, such as acetic acid; and terpenes, such as d-limonene. Among these, the organic solvent is preferably toluene, cyclopentyl methyl ether, tetrahydrofuran, or methylcyclohexane, more preferably toluene, cyclopentyl methyl ether, or methylcyclohexane.

An appropriate amount can be adopted as an amount of the organic solvent added as long as the effect of the present invention is not impaired. In terms of enabling further exhibition of the effect of the present invention, the amount of the organic solvent added is, for example, 300 parts by weight or less with respect to 100 parts by weight of the alkali compound, and may be 200 parts by weight, 150 parts by weight, 10 parts by weight to 150 parts by weight, 50 parts by weight to 130 parts by weight, or 70 parts by weight to 110 parts by weight. In terms of enabling even further exhibition of the effect of the present invention, the amount of the organic solvent added is adjusted preferably such that the alkali compound in the organic solvent is in an amount exceeding the solubility limit of the alkali compound in the organic solvent.

By adjusting the amount of the organic solvent added such that the alkali compound in the organic solvent is in an amount exceeding the solubility limit of the alkali compound in the organic solvent, at least a portion of the alkali compound can react in a solid state with the laminate. Consequently, compared to a case where the total amount of the alkali compound in contact with the laminate dissolves in the organic solvent to form an alkaline solution, the alkali compound can come into contact, at a high concentration, with the functional layer, and the temperature within the reaction system can be increased, thereby allowing the reaction to proceed efficiently. If the amount of the organic solvent added is excessively large, the total amount of the alkali compound in contact with the laminate dissolves in the organic solvent to form an alkaline solution, making it impossible for the alkali compound to come into contact, at a high concentration, with the functional layer, and the temperature within the reaction system may not be able to be increased to a level exceeding the boiling point of the alkaline solution.

In terms of enabling further exhibition of the effect of the present invention, the amount of the organic solvent added is, for example, 100 parts by weight or less with respect to 100 parts by weight of the laminate, and may be 70 parts by weight, 50 parts by weight, 1 part by weight to 30 parts by weight, 3 parts by weight to 20 parts by weight, or 5 parts by weight to 15 parts by weight.

In the laminate recycling method according to the embodiment of the present invention, the organic solvent is preferably added in the above appropriate amount after the contact between the laminate and the alkali compound. By adding the organic solvent in the above appropriate amount after the contact between the laminate and the alkali compound, the effect of the present invention can be further exhibited. In particular, by adopting an alcohol having high affinity for the functional layer and low affinity for the resin forming the substrate, the decomposition reaction of the functional layer by the alkali compound is allowed to progress more readily while the decomposition of the resin forming the substrate by the alkali compound can be suppressed. As a result, both the resin derived from the functional layer and the resin derived from the substrate can be more efficiently recovered.

In the laminate recycling method according to the embodiment of the present invention, a mixture including the laminate and the alkali compound is preferably kneaded in terms of enabling further exhibition of the effect of the present invention.

The kneading of the mixture including the laminate and the alkali compound is preferably performed using a kneading device configured to knead the mixture including the laminate and the alkali compound by applying a shear force thereto.

Examples of the kneading device configured to knead the mixture by applying a shear force thereto include kneading machines, such as a planetary mixer, a trimix (triple-arm planetary mixer), a kneader, a kneadex, a Henschel mixer, a single-screw extruder, and a twin-screw extruder.

In terms of enabling further exhibition of the effect of the present invention, the kneading device configured to knead the mixture by applying a shear force thereto is preferably a kneading machine including a stirring blade and a reactor, and a ratio B1/D1 of a diameter B1 (mm) of the stirring blade to a diameter D1 (mm) of the reactor is 0.5 or more. The above ratio B1/D1 is preferably 0.6 or more, more preferably 0.7 or more, even more preferably 0.8 or more, particularly preferably 0.9 or more. The upper limit of the above ratio B1/D1 is preferably 2.0 or less. When the above ratio B1/D1 is in the above range, the probability that the reaction site in the decomposition reaction of the functional layer will encounter the

alkali compound can be physically further increased, and the alkali compound at a high concentration comes into more direct contact with the reaction site in the decomposition reaction of the functional layer. As a result, the decomposition reaction of the functional layer proceeds more efficiently and separation from the substrate is also promoted further, and both the resin derived from the functional layer and the resin derived from the substrate can be more easily recovered from the laminate including the functional layer and the substrate without a plurality of complicated steps. Moreover, when the above ratio B1/D1 is in the above range, the decomposition reaction of the functional layer proceeds more efficiently, and therefore the time required for the decomposition reaction of the functional layer can be more dramatically shortened. In addition, for example, when the functional layer is formed of an acrylic pressure-sensitive adhesive and the above ratio B1/D1 is in the above range, a hydrophilic polymer can be obtained as a recycled acrylic polymer in a higher yield and a highly pure alcohol can be obtained in a higher yield by recovery (preferably, recovery under reduced pressure) of an alcohol generated together with the hydrophilic polymer. Furthermore, for example, when the functional layer is formed of an acrylic pressure-sensitive adhesive and the above ratio B1/D1 is in the above range, by forced recovery (preferably, recovery under reduced pressure) of the alcohol, a saponification reaction, which is an equilibrium reaction, is driven toward hydrophilic polymer generation according to Le Chatelier's principle, and therefore the yield of the hydrophilic polymer as a recycled acrylic polymer can be increased even further.

Examples of the stirring blade include a propeller blade, an edged turbine blade, a paddle blade, an anchor blade, a helical ribbon blade, a screw blade, and a disperser blade.

The diameter of the stirring blade means a rotational diameter of the stirring blade during rotation. In the case of a kneading device having a plurality of stirring blades, the sum of the diameters of the stirring blades is defined as the diameter B1 (mm) of the stirring blade. For example, in the case of a planetary mixer including three stirring blades each having a diameter of 50 mm, the diameter B1 of the stirring blade is 150 mm.

The kneading of the mixture including the laminate and the alkali compound may be performed simultaneously with the contact between the laminate and the alkali compound or after the contact between the laminate and the alkali compound. The kneading of the mixture including the laminate and the alkali compound is performed preferably by charging the laminate and the alkali compound into a kneading machine as described above and kneading them. As for the order of charging the laminate and the alkali compound into the kneading machine, either may be charged first, or they may be charged simultaneously. In terms of enabling further exhibition of the effect of the present invention, the order of charging the laminate and the alkali compound into the kneading machine is preferably such that the laminate is charged into the kneading machine first, followed by charging of the alkali compound, and more preferably, the laminate is charged into the kneading machine and subjected to preliminary stirring before the alkali compound is charged into the kneading machine. In these embodiments, the laminate and the alkali compound come into contact in a solid state upon charging of the alkali compound into the kneading machine. By charging them in this manner, the probability that the reaction site in the decomposition reaction will encounter the alkali compound can be physically further increased, and the effect of the present invention can be further exhibited. The preliminary stirring time may be set to an appropriate time as long as the effect of the present invention is not impaired. The preliminary stirring time is preferably 10 seconds to 30 minutes, more preferably 30 seconds to 20 minutes, even more preferably 1 minute to 10 minutes.

The laminate may be pulverized before being charged to the kneading machine.

The alkali compound may be pulverized before being charged to the kneading machine.

The kneading of the mixture including the laminate and the alkali compound can be performed at an appropriate temperature as long as the effect of the present invention is not impaired. The temperature is, for example, the internal temperature of the kneading machine, and the internal temperature of the kneading machine may be 5°C to 500°C, 10°C to 400°C, or 20°C to 300°C.

In terms of enabling further exhibition of the effect of the present invention, the kneading of the mixture including the laminate and the alkali compound is at least partially performed, preferably, under reduced pressure. The reduced pressure condition is preferably, -0.01 MPa or less, more preferably -0.05 MPa or less, even more preferably -0.07 MPa or less, particularly preferably -0.1 MPa or less in gauge pressure.

In the laminate recycling method according to the embodiment of the present invention, the resin derived from the functional layer and the resin derived from the substrate can be obtained as a result of progression of the reaction between the laminate and the alkali compound.

The laminate recycling method according to the embodiment of the present invention may include, after the reaction step, a separation step of separating the resin derived from the functional layer and the resin derived from the substrate.

An appropriate separation method can be adopted as a separation technique for separating the resin derived from the functional layer and the resin derived from the substrate in the separation step, as long as the effect of the present invention is not impaired. Examples of the separation technique include separation using a filter, separation using solubility in a liquid, separation using static electricity (electrostatic separation), and separation using specific gravity.

An appropriate separation method can be adopted for the separation using a filter as long as the effect of the present invention is not impaired. The separation method is, for example, separation using a filter that allows 90 wt% or

more of the resin derived from the functional layer to pass through the filter and that does not allow 90 wt% or more of the resin derived from the substrate to pass through the filter, preferably separation using a filter that allows 95 wt% or more of the resin derived from the functional layer to pass therethrough and that does not allow 95 wt% or more of the resin derived from the substrate to pass therethrough, more preferably separation using a filter that allows 98 wt% or more of the resin derived from the functional layer to pass therethrough and that does not allow 98 wt% or more of the resin derived from the substrate to pass therethrough, even more preferably separation using a filter that allows 99 wt% or more of the resin derived from the functional layer to pass therethrough and that does not allow 99 wt% or more of the resin derived from the substrate to pass therethrough, particularly preferably separation using a filter that allows 99.9 wt% or more of the resin derived from the functional layer to pass therethrough and that does not allow 99.9 wt% or more of the resin derived from the substrate to pass therethrough, most preferably separation using a filter that allows 100 wt% of the resin derived from the functional layer to pass therethrough and that does not allow 100 wt% of the resin derived from the substrate to pass therethrough.

An appropriate separation method can be adopted for the solubility in a liquid as long as the effect of the present invention is not impaired. The separation method is, for example, separation using a liquid in which 90 wt% or more of the resin derived from the functional layer dissolves and 90 wt% or more of the resin derived from the substrate does not dissolve, preferably separation using a liquid in which 95 wt% or more of the resin derived from the functional layer dissolves and 95 wt% or more of the resin derived from the substrate does not dissolve, more preferably separation using a liquid in which 98 wt% or more of the resin derived from the functional layer dissolves and 98 wt% or more of the resin derived from the substrate does not dissolve, even more preferably separation using a liquid in which 99 wt% or more of the resin derived from the functional layer dissolves and 99 wt% or more of the resin derived from the substrate does not dissolve, particularly preferably separation using a liquid in which 99.9 wt% or more of the resin derived from the functional layer dissolves and 99.9 wt% or more of the resin derived from the substrate does not dissolve, most preferably separation using a liquid in which 100 wt% of the resin derived from the functional layer dissolves and 100 wt% of the resin derived from the substrate does not dissolve. Examples of the liquid include water and organic solvents, and the liquid is preferably water.

The laminate recycling method according to the embodiment of the present invention may further include at least one selected from the group consisting of a recovery step A of recovering the resin derived from the functional layer and a recovery step B of recovering the resin derived from the substrate. An appropriate recovery means can be adopted as a recovery means in the recovery step A as long as the effect of the present invention is not impaired. An appropriate recovery means can be adopted as a recovery means in the recovery step B as long as the effect of the present invention is not impaired.

«1-1. Laminate»

In the laminate recycling method according to the embodiment of the present invention, the laminate is a material to be recycled. The laminate includes the functional layer and the substrate. As long as the laminate includes the functional layer and the substrate, the laminate may include an appropriate additional member as long as the effect of the present invention is not impaired.

An appropriate functional layer can be adopted as the functional layer as long as the effect of the present invention is not impaired. The functional layer may be composed of only one layer, or may be composed of two or more layers. In terms of enabling further exhibition of the effect of the present invention, the functional layer is preferably a functional layer including a resin as its main component. The resin included in the functional layer as its main component may be composed of only one resin, or may be composed of two or more resins. A proportion of the resin in the functional layer is preferably 50 wt% to 100 wt%, more preferably 70 wt% to 100 wt%, even more preferably 80 wt% to 100 wt%, particularly preferably 90 wt% to 100 wt%, most preferably 95 wt% to 100 wt%.

Regarding a thickness of the functional layer, an appropriate thickness can be adopted depending on the type, the intended use, and the like of the functional layer. The thickness is, for example, 0.001 μm to 1000 μm.

Specific examples of the functional layer include a pressure-sensitive adhesive layer, an adhesion-promoting layer, a release liner, a release layer, an antistatic layer, and a hard coat layer.

Examples of the resin included in the pressure-sensitive adhesive layer as its main component include an acrylic resin, a silicone-based resin, a urethane-based resin, and a rubber-based resin. That is, examples of the pressure-sensitive adhesive forming the pressure-sensitive adhesive layer include an acrylic pressure-sensitive adhesive, a silicone-based pressure-sensitive adhesive, a urethane-based pressure-sensitive adhesive, and a rubber-based pressure-sensitive adhesive.

Examples of the resin included in the adhesion-promoting layer as its main component include an acrylic resin, a urethane-based resin, a polyester-based resin, an amide-based resin, a polycarbonate-based resin, polyvinyl acetate, and a polyvinyl ether.

Examples of the resin included in the release liner as its main component include a polyester-based resin, a

silicone-based resin, a modified silicone resin, a urethane-based resin, an amino resin, an acrylic resin, an epoxy resin, and an alkyd resin.

Examples of the resin included in the release layer as its main component include a polyester-based resin, a silicone-based resin, a modified silicone resin, a urethane-based resin, an amino resin, an acrylic resin, an epoxy resin, and an alkyd resin.

Examples of the resin included in the antistatic layer as its main component include an acrylic resin, a polyester-based resin, and a urethane-based resin.

Examples of the resin included in the hard coat layer as its main component include an acrylic resin, a urethane-based resin, and an epoxy resin.

An appropriate substrate can be adopted as the substrate as long as the effect of the present invention is not impaired. The substrate may be composed of only one layer, or may be composed of two or more layers. In terms of enabling further exhibition of the effect of the present invention, the substrate is preferably a substrate including a resin as its main component. The resin included in the substrate as its main component may be composed of only one resin, or may be composed of two or more resins. A proportion of the resin in the substrate is preferably 50 wt% to 100 wt%, more preferably 70 wt% to 100 wt%, even more preferably 80 wt% to 100 wt%, particularly preferably 90 wt% to 100 wt%, most preferably 95 wt% to 100 wt%.

Regarding a thickness of the substrate, an appropriate thickness can be adopted depending on the type, the intended use, and the like of the substrate. The thickness is, for example, 1 μm to 1000 μm.

An appropriate resin can be adopted as the resin included in the substrate as its main component as long as the effect of the present invention is not impaired. Examples of the resin include polyimide (PI), polyetheretherketone (PEEK), polyethylene terephthalate (PET), polyethylene naphthalate (PEN), polybutylene terephthalate (PBT), an acrylic resin such as polymethyl methacrylate (PMMA), polycarbonate, triacetyl cellulose (TAC), polysulfone, polyarylate, polyethylene (PE), polypropylene (PP), an ethylene-propylene copolymer, an ethylene-vinyl acetate copolymer (EVA), a polyamide (nylon), a fully aromatic polyamide (aramid), polyvinyl chloride (PVC), polyvinyl acetate, polyphenylene sulfide (PPS), fluorine resin, and a cyclic-olefin-based polymer.

«1-2. Pressure-Sensitive Adhesive Tape as One Embodiment of Laminate»

One embodiment of the laminate as a material to be recycled is a pressure-sensitive adhesive tape in which the functional layer is a pressure-sensitive adhesive layer. That is, the pressure-sensitive adhesive tape includes a pressure-sensitive adhesive layer and a substrate. Such a pressure-sensitive adhesive tape is, for example, a pressure-sensitive adhesive tape as waste, and may be referred to as "waste pressure-sensitive adhesive tape." The pressure-sensitive adhesive layer may be composed of only one layer, or may be composed of two or more layers. The substrate may be composed of only one layer, or may be composed of two or more layers.

The pressure-sensitive adhesive layer is formed of a pressure-sensitive adhesive. Therefore, the pressure-sensitive adhesive tape includes the pressure-sensitive adhesive and the substrate.

The pressure-sensitive adhesive tape can be manufactured by an appropriate method as long as the effect of the present invention is not impaired. Examples of the manufacturing method include:

(1) a method in which the pressure-sensitive adhesive is produced on the substrate;
(2) a method in which the pressure-sensitive adhesive produced on a release liner is transferred to the substrate; and
(3) a method in which the pressure-sensitive adhesive is laminated onto the substrate.

The pressure-sensitive adhesive tape may include an appropriate release liner on a surface of the pressure-sensitive adhesive, the surface being farther from the substrate. Examples of the release liner include a release liner in which a surface of a substrate (liner substrate), such as paper or a plastic film, is silicone-treated and a release liner in which a polyolefin-based resin is laminated onto a surface of a substrate (liner substrate), such as paper or a plastic film. Examples of the plastic film as the liner substrate include a polyethylene film, a polypropylene film, a polybutene film, a polybutadiene film, a polymethylpentene film, a polyvinyl chloride film, a vinyl chloride copolymer film, a polyethylene terephthalate film, a polybutylene terephthalate film, a polyurethane film, and an ethylene-vinyl acetate copolymer film. A thickness of the release liner is preferably 1 μm to 500 μm, more preferably 3 μm to 450 μm, even more preferably 5 μm to 400 μm, and particularly preferably 10 μm to 300 μm.

<1-2-a. Substrate>

A thickness of the substrate included in the pressure-sensitive adhesive tape is preferably 1 μm to 500 μm, more preferably 5 μm to 300 μm, even more preferably 10 μm to 100 μm, particularly preferably 15 μm to 80 μm, and most preferably 20 μm to 60 μm, considering the functionality as a pressure-sensitive adhesive tape.

An appropriate substrate can be adopted as the substrate included in the pressure-sensitive adhesive tape as long as the effect of the present invention is not impaired. The substrate is typically a substrate included in a pressure-sensitive adhesive tape recovered after use. The substrate is, for example, a substrate as waste, and may be referred to as "waste substrate."

In terms of enabling further exhibition of the effect of the present invention, the substrate included in the pressure-sensitive adhesive tape is preferably a substrate including a resin as its main component. The resin included in the substrate as its main component may be composed of only one resin, or may be composed of two or more resins. A proportion of the resin in the substrate is preferably 50 wt% to 100 wt%, more preferably 70 wt% to 100 wt%, even more preferably 80 wt% to 100 wt%, particularly preferably 90 wt% to 100 wt%, most preferably 95 wt% to 100 wt%.

Examples of the resin included in the substrate of the pressure-sensitive adhesive tape as the main component include polyimide (PI), polyetheretherketone (PEEK), polyethylene terephthalate (PET), polyethylene naphthalate (PEN), polybutylene terephthalate (PBT), an acrylic resin such as polymethyl methacrylate (PMMA), polycarbonate, triacetyl cellulose (TAC), polysulfone, polyarylate, polyethylene (PE), polypropylene (PP), an ethylene-propylene copolymer, an ethylene-vinyl acetate copolymer (EVA), a polyamide (nylon), a fully aromatic polyamide (aramid), polyvinyl chloride (PVC), polyvinyl acetate, polyphenylene sulfide (PPS), fluorine resin, and a cyclic-olefin-based polymer.

<1-2-b. Pressure-Sensitive Adhesive>

The pressure-sensitive adhesive forms the pressure-sensitive adhesive layer on the substrate. A thickness of the pressure-sensitive adhesive layer is preferably 1 μm to 250 μm, more preferably 2 μm to 150 μm, even more preferably 3 μm to 100 μm, and particularly preferably 5 μm to 50 μm considering the functionality as a pressure-sensitive adhesive tape.

An appropriate pressure-sensitive adhesive can be adopted as the pressure-sensitive adhesive as long as the effect of the present invention is not impaired. The pressure-sensitive adhesive is typically an acrylic pressure-sensitive adhesive.

The acrylic pressure-sensitive adhesive is obtained by a crosslinking reaction of an acrylic pressure-sensitive adhesive composition including an acrylic polymer as a base polymer and a crosslinking agent, and has a cross-linked structure in which a main chain and a side chain are complexly entangled.

An appropriate acrylic pressure-sensitive adhesive can be adopted as the acrylic pressure-sensitive adhesive as long as the effect of the present invention is not impaired. The acrylic pressure-sensitive adhesive is typically an acrylic pressure-sensitive adhesive included in a pressure-sensitive adhesive tape recovered after use. The acrylic pressure-sensitive adhesive is, for example, an acrylic pressure-sensitive adhesive as waste, and may be referred to as "waste acrylic pressure-sensitive adhesive."

The acrylic pressure-sensitive adhesive can be produced by an appropriate method. The method is, for example, a method for producing the acrylic pressure-sensitive adhesive from an acrylic pressure-sensitive adhesive composition, and is more specifically a method for producing the pressure-sensitive adhesive (specifically, a pressure-sensitive adhesive layer) on an appropriate substrate by applying an acrylic pressure-sensitive adhesive composition to the substrate, heating or drying the acrylic pressure-sensitive adhesive composition as necessary, and curing the acrylic pressure-sensitive adhesive composition as necessary. Examples of the application method include methods involving a gravure roll coater, a reverse roll coater, a kiss roll coater, a dip roll coater, a bar coater, a knife coater, an air knife coater, a spray coater, a comma coater, a direct coater, a roll brush coater, and a die coater.

In terms of enabling further exhibition of the effect of the present invention, the acrylic pressure-sensitive adhesive composition preferably includes an acrylic polymer and a crosslinking agent in terms of enabling further exhibition of the effect of the present invention. The acrylic polymer can be what is called a base polymer in the field of acrylic pressure-sensitive adhesives. The acrylic polymer may be composed of only one acrylic polymer, or may be composed of two or more acrylic polymers.

A proportion of the acrylic polymer in the acrylic pressure-sensitive adhesive composition is preferably 50 weight% to 100 weight%, more preferably 60 weight% to 100 weight%, even more preferably 70 weight% to 100 weight%, particularly preferably 80 weight% to 100 weight%, and most preferably 90 weight% to 100 weight% in terms of solid content.

An appropriate acrylic polymer can be adopted as the acrylic polymer as long as the effect of the present invention is not impaired.

A weight-average molecular weight of the acrylic polymer is preferably 100,000 to 3,000,000, more preferably 150,000 to 2,000,000, even more preferably 200,000 to 1,500,000, and particularly preferably 250,000 to 1,000,000. A Tg (glass transition temperature) of the acrylic polymer is preferably -100°C to 30°C, more preferably -95°C to 20°C, even more preferably -90°C to 10°C, and particularly preferably -80°C to 0°C.

The acrylic polymer is, for example, an acrylic polymer formed through polymerization from Composition (A) including: (Component a) which is a (meth)acrylic acid alkyl ester whose alkyl ester moiety has an alkyl group having 1 to 12

carbon atoms; and (Component b) which is at least one selected from the group consisting of a (meth)acrylic acid ester having an OH group and (meth)acrylic acid. (Component a) and (Component b) may be respectively composed of only one (Component a) and only one (Component b), or may be respectively composed of two or more (Components a) and two or more (Components b).

Examples of the (meth)acrylic acid alkyl ester whose alkyl ester moiety has an alkyl group having 1 to 12 carbon atoms, namely (Component a), include methyl (meth)acrylate, ethyl (meth)acrylate, propyl (meth)acrylate, n-butyl (meth) acrylate, isobutyl (meth)acrylate, s-butyl (meth)acrylate, t-butyl (meth)acrylate, pentyl (meth)acrylate, hexyl (meth) acrylate, heptyl (meth)acrylate, octyl (meth)acrylate, 2-ethylhexyl (meth)acrylate, isooctyl (meth)acrylate, nonyl (meth) acrylate, isononyl (meth)acrylate, decyl (meth)acrylate, isodecyl (meth)acrylate, undecyl (meth)acrylate, and dodecyl (meth)acrylate. Among these, the (meth)acrylic acid alkyl ester whose alkyl ester moiety has an alkyl group having 1 to 12 carbon atoms, namely (Component a), is preferably n-butyl (meth)acrylate or 2-ethylhexyl (meth)acrylate, more preferably n-butyl acrylate or 2-ethylhexyl acrylate, in terms of enabling further exhibition of the effect of the present invention.

Examples of the at least one selected from the group consisting of a (meth)acrylic acid ester having an OH group and (meth)acrylic acid, namely (Component b), include (meth)acrylic acid esters each having an OH group, such as hydroxyethyl (meth)acrylate, hydroxypropyl (meth)acrylate, and hydroxybutyl (meth)acrylate, and (meth)acrylic acid. Among these, the at least one selected from the group consisting of a (meth)acrylic acid ester having an OH group and (meth)acrylic acid, namely (Component b), is preferably hydroxyethyl (meth)acrylate or (meth)acrylic acid, more preferably hydroxyethyl acrylate or acrylic acid, in terms of enabling further exhibition of the effect of the present invention.

Composition (A) may include a copolymerizable monomer other than (Component a) or (Component b). The copolymerizable monomer may be composed of only one copolymerizable monomer, or may be composed of two or more copolymerizable monomers. Examples of the copolymerizable monomer include: carboxyl-containing monomers (excluding (meth)acrylic acid), such as itaconic acid, maleic acid, fumaric acid, crotonic acid, isocrotonic acid, and acid anhydrides thereof (such as acid-anhydride-containing monomers, such as maleic anhydride and itaconic anhydride); amide-containing monomers, such as (meth)acrylamide, N,N-dimethyl (meth)acrylamide, N-methylol (meth)acrylamide, N-methoxymethyl (meth)acrylamide, N-butoxymethyl (meth)acrylamide, and N-hydroxyethyl (meth)acrylamide; amino-containing monomers, such as aminoethyl (meth)acrylate, dimethylaminoethyl (meth)acrylate, and t-butylaminoethyl (meth)acrylate; epoxy-containing monomers, such as glycidyl (meth)acrylate and methylglycidyl (meth)acrylate; cyano-containing monomers, such as acrylonitrile and methacrylonitrile; heterocycle-containing vinyl monomers, such as N-vinyl-2-pyrrolidone, (meth)acryloylmorpholine, N-vinylpiperidone, N-vinylpiperazine, N-vinylpyrrole, N-vinylimidazole, vinylpyridine, vinylpyrimidine, and vinyloxazole; sulfonic acid-containing monomers, such as sodium vinylsulfonate; phosphate-containing monomers, such as 2-hydroxyethylacryloyl phosphate; imide-containing monomers, such as cyclohexylmaleimide and isopropylmaleimide; isocyanate-containing monomers, such as 2-methacryloyloxyethyl isocyanate; alicyclic-hydrocarbon-containing (meth)acrylic acid esters, such as cyclopentyl (meth)acrylate, cyclohexyl (meth)acrylate, and isobornyl (meth)acrylate; aromatic-hydrocarbon-containing (meth)acrylic acid esters, such as phenyl (meth)acrylate, phenoxyethyl (meth)acrylate, and benzyl (meth)acrylate; vinyl esters, such as vinyl acetate and vinyl propionate; aromatic vinyl compounds, such as styrene and vinyltoluene; olefins and dienes, such as ethylene, butadiene, isoprene, and isobutylene; vinyl ethers, such as vinylalkyl ether; and vinyl chloride.

A polyfunctional monomer can also be adopted as the copolymerizable monomer. The polyfunctional monomer is a monomer having two or more ethylenically unsaturated groups per molecule. An appropriate ethylenically unsaturated group can be adopted as the ethylenically unsaturated group as long as the effect of the present invention is not impaired. Examples of the ethylenically unsaturated group include radical polymerizable functional groups, such as a vinyl group, a propenyl group, an isopropenyl group, a vinyl ether group (vinyloxy group), and an allyl ether group (allyloxy group). Examples of the polyfunctional monomer include hexanediol di(meth)acrylate, butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth) acrylate, tetramethylolmethane tri(meth)acrylate, allyl (meth)acrylate, vinyl (meth)acrylate, divinylbenzene, epoxy acrylate, polyester acrylate, and urethane acrylate. The polyfunctional monomer may be composed of only one polyfunctional monomer, or may be composed of two or more polyfunctional monomers.

A (meth)acrylic acid alkoxyalkyl ester can also be adopted as the copolymerizable monomer. Examples of the (meth)acrylic acid alkoxyalkyl ester include 2-methoxyethyl (meth)acrylate, 2-ethoxyethyl (meth)acrylate, methoxytriethylene glycol (meth)acrylate, 3-methoxypropyl (meth)acrylate, 3-ethoxypropyl (meth)acrylate, 4-methoxybutyl (meth) acrylate, and 4-ethoxybutyl (meth)acrylate. The (meth)acrylic acid alkoxyalkyl ester may be composed of only one (meth)acrylic acid alkoxyalkyl ester, or may be composed of two or more (meth)acrylic acid alkoxyalkyl esters.

An amount of the (meth)acrylic acid alkyl ester whose alkyl ester moiety has an alkyl group having 1 to 12 carbon atoms, namely (Component a), is preferably 50 weight% or more, more preferably 60 weight% to 100 weight%, even more preferably 70 weight% to 100 weight%, and particularly preferably 80 weight% to 100 weight% with respect to a total amount (100 weight%) of the monomer components forming the acrylic polymer in terms of enabling further exhibition of the effect of the present invention.

An amount of the at least one selected from the group consisting of a (meth)acrylic acid ester having an OH group and (meth)acrylic acid, namely (Component b), is preferably 0.1 weight% or more, more preferably 1.0 weight% to 50 weight%, even more preferably 1.5 weight% to 40 weight%, and particularly preferably 2.0 weight% to 30 weight% with respect to the total amount (100 weight%) of the monomer components forming the acrylic polymer in terms of enabling further exhibition of the effect of the present invention.

Composition (A) can include an appropriate additional component as long as the effect of the present invention is not impaired. Examples of the additional component include a polymerization initiator, a chain transfer agent, and a solvent. Regarding an amount of the additional component, an appropriate amount can be adopted as long as the effect of the present invention is not impaired. The additional component may be composed of only one component, or may be composed of two or more components.

The acrylic pressure-sensitive adhesive composition may include a crosslinking agent. Cohesion of the acrylic pressure-sensitive adhesive can be enhanced by including the crosslinking agent, and thus the effect of the present invention can be further exhibited. The crosslinking agent may be composed of only one crosslinking agent, or may be composed of two or more crosslinking agents.

Examples of the crosslinking agent include a polyfunctional-isocyanate-based crosslinking agent, an epoxy-based crosslinking agent, a melamine-based crosslinking agent, a peroxide-based crosslinking agent, an urea-based crosslinking agent, a metal-alkoxide-based crosslinking agent, a metal-chelate-based crosslinking agent, a metal-salt-based crosslinking agent, a carbodiimide-based crosslinking agent, an oxazoline-based crosslinking agent, an aziridine-based crosslinking agent, and an amine-based crosslinking agent. Among these, the crosslinking agent is preferably at least one selected from the group consisting of a polyfunctional-isocyanate-based crosslinking agent and an epoxy-based crosslinking agent in terms of enabling further exhibition of the effect of the present invention.

Examples of the polyfunctional-isocyanate-based crosslinking agent include: lower aliphatic polyisocyanates, such as 1,2-ethylene diisocyanate, 1,4-butylene diisocyanate, and 1,6-hexamethylene diisocyanate; alicyclic polyisocyanates, such as cyclopentylene diisocyanate, cyclohexylene diisocyanate, isophorone diisocyanate, hydrogenated tolylene diisocyanate, and hydrogenated xylene diisocyanate; and aromatic polyisocyanates, such as 2,4-tolylene diisocyanate, 2,6-tolylene diisocyanate, 4,4'-diphenylmethane diisocyanate, and xylylene diisocyanate. Examples of the polyfunctional-isocyanate-based crosslinking agent also include commercially available products, such as trimethylolpropane/tolylene diisocyanate adducts (e.g., the product name "TAKENATE D101A" manufactured by Mitsui Chemicals, Inc.), trimethylolpropane/hexamethylene diisocyanate adducts (e.g., the product names "Coronate HL" and "Coronate HX" manufactured by Tosoh Corporation), and trimethylolpropane/xylylene diisocyanate adducts (e.g., the product name "TAKENATE 110N" manufactured by Mitsui Chemicals, Inc.).

Examples of the epoxy-based crosslinking agent (polyfunctional epoxy compound) include N,N,N',N'-tetraglycidyl-m-xylenediamine, diglycidyl aniline, 1,3-bis(N,N-diglycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, adipic acid diglycidyl ester, o-phthalic acid diglycidyl ester, triglycidyl-tris(2-hydroxyethyl)isocyanurate, resorcin diglycidyl ether, bisphenol-S-diglycidyl ether, and an epoxy-based resin having two or more epoxy groups per molecule. Examples of the epoxy-based crosslinking agent also include commercially available products, such as one manufactured under the product name "TETRAD C" (by Mitsubishi Gas Chemical Company, Inc.).

Regarding an amount of the crosslinking agent in the acrylic pressure-sensitive adhesive composition, an appropriate amount can be adopted as long as the effect of the present invention is not impaired. The amount thereof is, for example, preferably 0.1 parts by weight to 20 parts by weight, more preferably 0.3 parts by weight to 10 parts by weight, even more preferably 0.5 parts by weight to 8.0 parts by weight, and particularly preferably 1.0 parts by weight to 6.0 parts by weight with respect to solids (100 parts by weight) of the acrylic polymer.

The acrylic pressure-sensitive adhesive composition can include an appropriate additional component as long as the effect of the present invention is not impaired. Examples of the additional component include a polymer component other than the acrylic polymer, a crosslinking accelerator, a crosslinking catalyst, a silane coupling agent, a tackifier resin (such as a rosin derivative, a polyterpene resin, a petroleum resin, or an oil-soluble phenol), an anti-aging agent, an inorganic filler, an organic filler, a metal powder, a colorant (such as a pigment or a dye), a foil-shaped component, an ultraviolet absorbent, an antioxidant, a light stabilizer, a chain transfer agent, a plasticizer, a softener, a surfactant, an antistatic agent, a conductive agent, a stabilizer, a surface lubricant, a leveling agent, a corrosion inhibitor, a heat-resistant stabilizer, a polymerization inhibitor, a lubricant, a solvent, and a catalyst.

«1-3. Alkali Compound»

An appropriate solid alkali compound can be adopted as the alkali compound as long as the effect of the present invention is not impaired. Examples of the alkali compound include hydroxides, carbonates, and the like, such as

potassium hydroxide, sodium hydroxide, and calcium hydroxide, of alkali metals and alkaline earth metals and metal alkoxides, such as sodium methoxide, sodium ethoxide, and potassium t-butoxide. The alkali compound is preferably at least one selected from the group consisting of potassium hydroxide, sodium hydroxide, and sodium ethoxide.

««2. Typical Embodiment of Laminate Recycling Method»»

The laminate recycling method according to the embodiment of the present invention is applicable to various types of laminate described above. Hereinafter, a typical embodiment of the laminate recycling method of the present invention will be described using, as an example, a case where the laminate is a pressure-sensitive adhesive tape including an acrylic pressure-sensitive adhesive layer and a substrate. In this case, the acrylic pressure-sensitive adhesive layer corresponds to the functional layer. The pressure-sensitive adhesive tape may include an appropriate release liner on a surface of the acrylic pressure-sensitive adhesive layer, the surface being farther from the substrate.

«2-1. Contact between Pressure-Sensitive Adhesive Tape and Alkali Compound»

The contact between the pressure-sensitive adhesive tape and the alkali compound is achieved by bringing the pressure-sensitive adhesive tape including the acrylic pressure-sensitive adhesive layer and the substrate and the alkali compound into contact with each other in a solid state.

Examples of the resin derived from the acrylic pressure-sensitive adhesive layer include a resin included in the acrylic pressure-sensitive adhesive layer and a resin that can be a raw material for forming the resin included in the acrylic pressure-sensitive adhesive layer.

Examples of the resin derived from the substrate include a resin included in the substrate and a resin that can be a raw material for forming the resin included in the substrate.

It should be noted that unintended and unavoidable coexistence of a liquid at the time of the contact between the pressure-sensitive adhesive tape and the alkali compound is encompassed within the above "solid state." For example, coexistence of moisture due to ingress of humidity from a reaction atmosphere and coexistence of moisture unavoidably contained in the alkali compound that is solid (for example, coexistence of moisture that may be contained in solid potassium hydroxide or solid sodium hydroxide) are encompassed within the above "solid state." As for the pressure-sensitive adhesive tape, coexistence of a liquid, such as a residual solvent, that may be originally contained in the pressure-sensitive adhesive tape to the extent the liquid does not impair the solid state thereof is also encompassed within the above "solid state."

An appropriate method can be adopted to achieve the contact between the pressure-sensitive adhesive tape and the alkali compound, as long as the effect of the present invention is not impaired. The method is, for example, a method including bringing the pressure-sensitive adhesive tape that is solid and, as necessary, pulverized and the alkali compound that is solid into contact with each other in an appropriate reactor (such as a kneading machine as described above).

To achieve the contact between the pressure-sensitive adhesive tape and the alkali compound, at least a portion of the pressure-sensitive adhesive tape used and at least a portion of the alkali compound used are required to come into contact. The contact between the laminate and the alkali compound is typically, as described later, a state achieved by charging the pressure-sensitive adhesive tape and the alkali compound into a kneading machine and kneading them.

An amount of the alkali compound used with respect to the pressure-sensitive adhesive tape may be set as appropriate depending on a constituent material and the type of the pressure-sensitive adhesive tape. Theoretically, an amount required for saponification of the acrylic pressure-sensitive adhesive may be set. If a large amount of unreacted alkali remains in a product, a post-treatment is required to treat the unreacted alkali. To maximize recovered amounts of the hydrophilic polymer and the alcohol, an amount of the alkali compound used with respect to the acrylic pressure-sensitive adhesive is, typically, preferably 0.5 molar equivalent to 2.0 molar equivalent, more preferably 0.7 molar equivalent to 1.5 molar equivalent, even more preferably 0.8 molar equivalent to 1.2 molar equivalent, particularly preferably 0.9 molar equivalent to 1.1 molar equivalent per molar equivalent of an acrylic pressure-sensitive adhesive base polymer.

«2-2. Addition of Organic Solvent»

An organic solvent may be added after the contact between the pressure-sensitive adhesive tape and the alkali compound. The organic solvent can be added at any appropriate timing after the contact between the pressure-sensitive adhesive tape and the alkaline compound, as long as the effect of the present invention is not impaired. The organic solvent may be added during kneading of a mixture including the pressure-sensitive adhesive tape and the alkali compound or when a mixture including the pressure-sensitive adhesive tape and the alkali compound is not being kneaded.

The organic solvent may be composed of only one organic solvent, or may be composed of two or more organic solvents.

An appropriate organic solvent can be adopted as the organic solvent as long as the effect of the present invention is not impaired. Examples of the organic solvent include the organic solvents described above, and the organic solvent is typically an alcohol.

An appropriate amount can be adopted as an amount of the organic solvent added as long as the effect of the present invention is not impaired. In terms of enabling further exhibition of the effect of the present invention, the amount of the organic solvent added is, for example, 300 parts by weight or less with respect to 100 parts by weight of the alkali compound, and may be 200 parts by weight, 150 parts by weight, 10 parts by weight to 150 parts by weight, 50 parts by weight to 130 parts by weight, or 70 parts by weight to 110 parts by weight. In terms of enabling even further exhibition of the effect of the present invention, the amount of the organic solvent added is adjusted preferably such that the alkali compound in the organic solvent is in an amount exceeding the solubility limit of the alkali compound in the organic solvent.

By adjusting the amount of the organic solvent added such that the alkali compound in the organic solvent is in an amount exceeding the solubility limit of the alkali compound in the organic solvent, at least a portion of the alkali compound can react in a solid state with the laminate. Consequently, compared to a case where the total amount of the alkali compound in contact with the laminate dissolves in the organic solvent to form an alkaline solution, the temperature within the reaction system can be increased, thereby allowing the reaction to proceed efficiently. If the amount of the organic solvent added is excessively large, the total amount of the alkali compound in contact with the laminate dissolves in the organic solvent to form an alkaline solution, the temperature within the reaction system may not be able to be increased to a level exceeding the boiling point of the alkaline solution. Furthermore, in the case of adding an alcohol of the same type as an alcohol generated by the decomposition of the acrylic pressure-sensitive adhesive, the presence of a large amount of the alcohol in the system may adversely affect equilibrium in reaction.

In terms of enabling further exhibition of the effect of the present invention, the amount of the organic solvent added is, for example, 100 parts by weight or less with respect to 100 parts by weight of the pressure-sensitive adhesive tape, and may be 70 parts by weight, 50 parts by weight, 1 part by weight to 30 parts by weight, 3 parts by weight to 20 parts by weight, or 5 parts by weight to 15 parts by weight.

When the laminate recycling method according to the embodiment of the present invention is applied to a pressure-sensitive adhesive tape recycling method, the organic solvent is preferably added in the above appropriate amount after the contact between the pressure-sensitive adhesive tape and the alkali compound. By adding the organic solvent in the above appropriate amount after the contact between the pressure-sensitive adhesive tape and the alkali compound, the effect of the present invention can be further exhibited. In particular, by adopting an alcohol having high affinity for the acrylic pressure-sensitive adhesive layer as the functional layer and low affinity for the resin forming the substrate and the resin forming the release liner, the decomposition reaction of the acrylic pressure-sensitive adhesive layer by the alkali compound is allowed to progress more readily while the decomposition of the resin forming the substrate and the resin forming the release liner by the alkali compound can be suppressed. As a result, the resin derived from the acrylic pressure-sensitive adhesive layer, the resin derived from the substrate, and the resin derived from the release liner can all be more efficiently recovered.

The alcohol having high affinity for the acrylic pressure-sensitive adhesive layer as the functional layer and low affinity for the resin forming the substrate and the resin forming the release liner can be selected as appropriate depending on the type and the like of the substrate and the release liner. The alcohol is, for example, 2-ethylhexanol in the case of a pressure-sensitive adhesive tape including an acrylic pressure-sensitive adhesive layer and a PET substrate, and is, for example, 1-butanol in the case of a pressure-sensitive adhesive tape including an acrylic pressure-sensitive adhesive layer and a polyethylene substrate.

«2-3. Kneading»

The mixture including the pressure-sensitive adhesive tape and the alkali compound is preferably kneaded in terms of enabling further exhibition of the effect of the present invention.

The kneading of the mixture including the pressure-sensitive adhesive tape and the alkali compound is preferably performed using a kneading device configured to knead the mixture including the pressure-sensitive adhesive tape and the alkali compound by applying a shear force to the mixture.

The kneading device configured to knead the mixture by applying a shear force thereto is as described above.

The kneading of the mixture including the pressure-sensitive adhesive tape and the alkali compound may be performed simultaneously with the contact between the pressure-sensitive adhesive tape and the alkali compound or after the contact between the pressure-sensitive adhesive tape and the alkali compound. The kneading of the mixture including the pressure-sensitive adhesive tape and the alkali compound is performed preferably by charging the pressure-sensitive adhesive tape and the alkali compound into a kneading machine as described above and kneading them. As for the order of charging the pressure-sensitive adhesive tape and the alkali compound into the kneading machine, either may be charged first, or they may be charged simultaneously. In terms of enabling further exhibition of the effect of the present invention, the order of charging the pressure-sensitive adhesive tape and the alkali compound into the kneading machine

is preferably such that the pressure-sensitive adhesive tape is charged into the kneading machine first, followed by charging of the alkali compound, and more preferably, the pressure-sensitive adhesive tape is charged into the kneading machine and subjected to preliminary stirring before the alkali compound is charged into the kneading machine. In these embodiments, the pressure-sensitive adhesive tape and the alkali compound come into contact in a solid state upon charging of the alkali compound into the kneading machine. By charging them in this manner, the probability that the reaction site in the saponification reaction will encounter the alkali compound can be physically further increased, and the effect of the present invention can be further exhibited. The preliminary stirring time may be set to an appropriate time as long as the effect of the present invention is not impaired. The preliminary stirring time is preferably 10 seconds to 120 minutes, more preferably 30 seconds to 60 minutes, even more preferably 1 minute to 30 minutes, particularly preferably 1 minute to 20 minutes, most preferably 1 minute to 10 minutes.

The pressure-sensitive adhesive tape may be pulverized before being charged to the kneading machine.

The alkali compound may be pulverized before being charged to the kneading machine.

The kneading of the mixture including the pressure-sensitive adhesive tape and the alkali compound can be performed at an appropriate temperature as long as the effect of the present invention is not impaired. The temperature is, for example, the internal temperature of the kneading machine, and the internal temperature of the kneading machine is typically 5°C to the melting point of the resin forming the substrate (typically, the resin included in the substrate as its main component) when the pressure-sensitive adhesive tape does not include a release line. When the pressure-sensitive adhesive tape includes a release liner, the upper limit can be the higher one of the melting point of the resin forming the substrate (typically, the resin included in the substrate as its main component) and the melting point of the resin forming the release liner (typically, the resin included in the release liner as its main component).

In terms of enabling further exhibition of the effect of the present invention, the kneading of the mixture including the pressure-sensitive adhesive tape and the alkali compound is at least partially performed, preferably, under reduced pressure. The reduced pressure condition is as described above.

By applying the laminate recycling method according to the embodiment of the present invention to a pressure-sensitive adhesive tape recycling method, typically, a hydrophilic polymer can be obtained and recovered as the resin derived from the acrylic pressure-sensitive adhesive layer serving as the functional layer, the resin included in the substrate as its main component can be obtained and recovered as the resin derived from the substrate, and, preferably, an alcohol can be obtained and recovered as a liquid or as a vapor thereof by a saponification reaction in the reaction system. When the pressure-sensitive adhesive tape includes a release liner, the resin included in the release liner as its main component can also be obtained and recovered.

Typically, the reaction between the acrylic pressure-sensitive adhesive and the alkali compound allows a saponification reaction to progress in the reaction system (typically in the kneading machine), thereby giving a hydrophilic polymer, the resin included in the substrate as its main component, and an alcohol. The hydrophilic polymer and the resin included in the substrate as its main component are obtained typically as a solid mixture. The alcohol is obtained typically as a liquid or as a vapor thereof.

The crosslink cleavage and the saponification reaction of the cross-linked structure of the crosslinking polymer included as a principal polymer component in the acrylic pressure-sensitive adhesive layer of the pressure-sensitive adhesive tape proceed very smoothly, enabling production of a hydrophilic polymer derived from the acrylic pressure-sensitive adhesive having a carboxyl group in a side chain thereof without greatly decreasing the molecular weight relative to the base polymer. The term "hydrophilic polymer derived from the acrylic pressure-sensitive adhesive" herein means a hydrophilic polymer having a structure derived from the base polymer used to form the acrylic pressure-sensitive adhesive, and specifically means, for example, a hydrophilic polymer having a structure where at least a portion of a functional group (such as a carboxyl group or an ester group) at a terminal of a side chain of the base polymer for forming the acrylic pressure-sensitive adhesive has been subjected to the saponification reaction with the alkali compound.

In addition, by the contact between the pressure-sensitive adhesive tape and the alkali compound in a solid state, the probability that the reaction site in the saponification reaction will encounter the alkali compound can be physically increased. Accordingly, it is presumed that the alkali compound at a high concentration comes into direct contact with the reaction site in the saponification reaction, and therefore a saponification reaction time can be dramatically shortened and a high yield of the resulting hydrophilic polymer can be achieved.

As a result of the above reaction, typically, the hydrophilic polymer and the resin included in the substrate as its main component are obtained as a solid mixture, and the alcohol is obtained as a liquid or as a vapor thereof.

«2-4. Alcohol Recovery Step»

When the laminate recycling method according to the embodiment of the present invention is applied to a pressure-sensitive adhesive tape recycling method, an alcohol recovery step of recovering the alcohol generated by the reaction between the acrylic pressure-sensitive adhesive and the alkali compound may be included.

In the alcohol recovery step, the alcohol generated by the reaction between the acrylic pressure-sensitive

adhesive and the alkali compound is recovered. An appropriate method can be adopted as the method for recovering the alcohol as long as the effect of the present invention is not impaired. The method is, for example, recovery under reduced pressure in terms of enabling further exhibition of the effect of the present invention. The recovery under reduced pressure is performed, for example, by reducing the pressure in the reaction system (typically in the kneading machine) and then trapping and recovering the alcohol generated in the reaction system (typically in the kneading machine).

The alcohol recovery step enables forced removal of the alcohol from the reaction system (typically the kneading machine). Consequently, the saponification reaction, which is an equilibrium reaction, is driven toward hydrophilic polymer generation according to Le Chatelier's principle, and the yield of the hydrophilic polymer can be further increased.

«2-5. Separation Step»

When the laminate recycling method according to the embodiment of the present invention is applied to a pressure-sensitive adhesive tape recycling method, a separation step of separating the hydrophilic polymer and the resin derived from the substrate after the reaction between the acrylic pressure-sensitive adhesive and the alkali compound may be included.

When the laminate recycling method according to the embodiment of the present invention is applied to a pressure-sensitive adhesive tape recycling method, the reaction between the acrylic pressure-sensitive adhesive and the alkali compound typically produces, as a solid mixture, the hydrophilic polymer and the resin included in the substrate as its main component. An appropriate separation method can be adopted as a separation technique for separating them in the separation step as long as the effect of the present invention is not impaired. Examples of the separation technique include separation using a filter, separation using solubility in a liquid, separation using static electricity (electrostatic separation), and separation using specific gravity.

The separation using a filter is, for example, separation using a filter that allows 90 wt% or more of the hydrophilic polymer to pass through the filter and that does not allow 90 wt% or more of the resin included in the substrate as its main component to pass through the filter, preferably separation using a filter that allows 95 wt% or more of the hydrophilic polymer to pass therethrough and that does not allow 95 wt% or more of the resin included in the substrate as its main component to pass therethrough, more preferably separation using a filter that allows 98 wt% or more of the hydrophilic polymer to pass therethrough and that does not allow 98 wt% or more of the resin included in the substrate as its main component to pass therethrough, even more preferably separation using a filter that allows 99 wt% or more of the hydrophilic polymer to pass therethrough and that does not allow 99 wt% or more of the resin included in the substrate as its main component to pass therethrough, particularly preferably separation using a filter that allows 99.9 wt% or more of the hydrophilic polymer to pass therethrough and that does not allow 99.9 wt% or more of the resin included in the substrate as its main component to pass therethrough, most preferably separation using a filter that allows 100 wt% of the hydrophilic polymer to pass therethrough and that does not allow 100 wt% of the resin included in the substrate as its main component to pass therethrough.

The separation using solubility in a liquid is, for example, separation using a liquid in which 90 wt% or more of the hydrophilic polymer dissolves and 90 wt% or more of the resin included in the substrate as its main component does not dissolve, preferably separation using a liquid in which 95 wt% or more of the hydrophilic polymer dissolves and 95 wt% or more of the resin included in the substrate as its main component does not dissolve, more preferably separation using a liquid in which 98 wt% or more of the hydrophilic polymer dissolves and 98 wt% or more of the resin included in the substrate as its main component does not dissolve, even more preferably separation using a liquid in which 99 wt% or more of the hydrophilic polymer dissolves and 99 wt% or more of the resin included in the substrate as its main component does not dissolve, particularly preferably separation using a liquid in which 99.9 wt% or more of the hydrophilic polymer dissolves and 99.9 wt% or more of the resin included in the substrate as its main component does not dissolve, most preferably separation using a liquid in which 100 wt% of the hydrophilic polymer dissolves and 100 wt% of the resin included in the substrate as its main component does not dissolve. Examples of the liquid include water and organic solvents, and the liquid is preferably water.

«2-6. Recovery Step»

When the laminate recycling method according to the embodiment of the present invention is applied to a pressure-sensitive adhesive tape recycling method, at least one selected from the group consisting of the recovery step A of recovering the hydrophilic polymer and the recovery step B of recovering the resin derived from the substrate may be further included. An appropriate recovery means can be adopted as a recovery means in the recovery step A as long as the effect of the present invention is not impaired. An appropriate recovery means can be adopted as a recovery means in the recovery step B as long as the effect of the present invention is not impaired.

«2-7. Impurity Separation Step»

When the laminate recycling method according to the embodiment of the present invention is applied to a pressure-sensitive adhesive tape recycling method, an impurity separation step of separating impurities may be included.
In the impurity separation step, impurities are separated from a solid mixture obtained by the reaction between the acrylic pressure-sensitive adhesive and the alkali compound, the solid mixture including the hydrophilic polymer and the resin included in the substrate as its main component. An appropriate method can be adopted as the method for separating impurities from the solid mixture including the hydrophilic polymer and the resin included in the substrate as its main component as long as the effect of the present invention is not impaired. In terms of enabling further exhibition of the effect of the present invention, examples of the method include: (1) a method including dissolving the solid mixture including the hydrophilic polymer and the resin included in the substrate as its main component in an appropriate liquid (typically, water), neutralizing the residual of the alkali compound with an acid (such as acetic acid), as necessary, and then separating impurities by centrifugation; and (2) a method including adding an appropriate washing liquid (such as an ethyl acetate-methanol solvent mixture) to the solid mixture including the hydrophilic polymer and the resin included in the substrate as its main component to wash the solid mixture and thereby separating impurities.
By the impurity separation step, impurities are separated from the solid mixture including the hydrophilic polymer and the resin included in the substrate as its main component.

«2-8. Washing Step»

The laminate recycling method according to the embodiment of the present invention may include a washing step of washing the resin included in the substrate as its main component and recovered from the substrate. An appropriate washing technique can be adopted as a washing technique in the washing step as long as the effect of the present invention is not impaired. The washing technique is, for example, washing with water. For a pressure-sensitive adhesive tape including a release liner, not only the substrate but also the release liner can also be washed in the washing step.

«2-9. Drying Step»

When the laminate recycling method according to the embodiment of the present invention is applied to a pressure-sensitive adhesive tape recycling method, at least one selected from the group consisting of a drying step of drying the hydrophilic polymer and a drying step of drying the resin included in the substrate as its main component may be included.
Appropriate conditions can be adopted as drying conditions as long as the effect of the present invention is not impaired. The conditions are, for example, a drying temperature of 80°C to 150°C and a drying time of 0.5 hours to 20 hours.

«2-10. Additional Step»

When the laminate recycling method according to the embodiment of the present invention is applied to a pressure-sensitive adhesive tape recycling method, an appropriate additional step may be included, as long as the effect of the present invention is not impaired.

EXAMPLES

Hereinafter, the present invention will be described in detail with examples. The present invention is not limited to these examples. Test and evaluation methods for the examples, etc. are as described below.

<Pressure-Sensitive Adhesive Removal Rate>

A nitrogen component derived from a crosslinking agent was determined by total nitrogen analysis, and a pressure-sensitive adhesive removal rate was calculated from the following equation.

Pressure-sensitive adhesive removal rate (%) = 100 × [(amount of nitrogen in tape - amount of nitrogen in treated sample)/amount of nitrogen in tape]

<Calculation of Degree of Carboxylation>

A degree of carboxylation was calculated from a ratio of peak intensities obtained from (meth)acrylic acid and

(meth)acrylic acid ester in a product by $^{13}C$-NMR.

<Substrate/Release Liner Recovery Rate>

A recovery rate of a substrate and a release liner (which may be referred to as "substrate/release liner recovery rate") was calculated by the following equation.

Substrate/Release liner recovery rate (%) = 100 × [(weight of solids recovered after washing - amount of residual pressure-sensitive adhesive)/amount of charged substrate and release liner]

The amount of the residual pressure-sensitive adhesive is calculated by multiplying the amount of the charged pressure-sensitive adhesive by the pressure-sensitive adhesive removal rate.

[Production Example 1]: Preparation of Pressure-Sensitive Adhesive Tape (A)

An amount of 96 parts by weight of 2-ethylhexyl acrylate (2EHA) and 4 parts by weight of hydroxyethyl acrylate (HEA) as monomers, 0.2 parts by weight of 2,2'-azobisisobutyronitrile as a polymerization initiator, and 233 parts by weight of ethyl acetate were charged in a four-neck flask equipped with a stirring blade, a thermometer, a nitrogen gas introduction pipe, and a condenser. Nitrogen gas was introduced thereto under gentle stirring, and the mixture was heated to 60°C. While the temperature of the solution in the flask was maintained at around 60°C, a polymerization reaction was performed for seven hours to give a solution of an acrylic polymer (a) having a weight-average molecular weight of 550,000.

An amount of 100 parts by weight (solids) of the acrylic polymer (a), 4 parts by weight of an isocyanate compound (Coronate HX manufactured by Tosoh Corporation) as a crosslinking agent, and 0.015 parts by weight of EMBILIZER OL-1 (manufactured by Tokyo Fine Chemical CO., LTD.) as a catalyst were blended, and were diluted with ethyl acetate so that the total solid content would be 20 wt%. An acrylic pressure-sensitive adhesive composition (a) was obtained in this manner.

The acrylic pressure-sensitive adhesive composition (a) was applied to a PET substrate (the product name "DIAFOIL T100" having a thickness of 38 μm and manufactured by Mitsubishi Chemical Corporation) so that the thickness after drying would be 21 μm. The applied composition was covered with a 25 μm-thick PET release liner, and dried by curing under conditions at a drying temperature of 130°C for a drying time of 30 seconds to produce a pressure-sensitive adhesive tape (A).

[Production Example 2]: Preparation of Pressure-Sensitive Adhesive Tape (B)

An amount of 64 parts by weight of ethylacrylate (EA), 27 parts by weight of 2-ethylhexyl acrylate (2EHA), 4 parts by weight of hydroxyethyl acrylate (HEA), and 5 parts by weight of methyl methacrylate (MMA) as monomers and 186 parts by weight of toluene were charged in a separable flask equipped with a stirring blade, a thermometer, a nitrogen gas introduction pipe, a dropping flask, and a condenser. Nitrogen gas was introduced thereto for 30 minutes. An amount of 0.2 parts by weight of benzoyl peroxide was charged as a polymerization initiator to a dropping flask. During the introduction of nitrogen gas, the separable flask was heated to 60°C. While the solution in the separable flask was maintained at a temperature around 60°C under stirring, the polymerization initiator was added dropwise from the dropping flask. After completion of the addition, aging was carried out at 60°C for 1.5 hours to give a solution of an acrylic polymer (b) having a weight-average molecular weight of 500,000.

An amount of 100 parts by weight (solids) of the acrylic polymer (b), 1.4 parts by weight of an isocyanate compound (Coronate L manufactured by Tosoh Corporation) as a crosslinking agent, 10 parts by weight of a terpene phenolic resin (SUMILITERESIN PR-12603 manufactured by Sumitomo Bakelite Co., Ltd.) as a tackifier, and 0.05 parts by weight of EMBILIZER OL-1 (manufactured by Tokyo Fine Chemical CO., LTD.) as a catalyst were blended, and were diluted with toluene so that the total solid content would be 35 wt%. An acrylic pressure-sensitive adhesive composition (b) was obtained in this manner.

The acrylic pressure-sensitive adhesive composition (b) was applied to a PET substrate (the product name "Lumirror" having a thickness of 100 μm and manufactured by Toray Industries, Inc.) so that the thickness after drying would be 48 μm. The applied composition was dried under conditions at a drying temperature of 120°C for a drying time of 3 minutes, and then covered with a 25 μm-thick PET release liner to produce a pressure-sensitive adhesive tape (B).

[Production Example 3]: Preparation of Pressure-Sensitive Adhesive Tape (C)

An amount of 59 parts by weight of n-butyl acrylate (BA), 40 parts by weight of n-butyl methacrylate (BMA), 1 part

by weight of acrylic acid (AA), 0.1 parts by weight of 2,2'-azobis(2-methylpropionamidine) dihydrochloride (manufactured by Wako Pure Chemical Industries, Ltd. under the product name "V-50") as a polymerization initiator, 0.3 parts by weight of polyoxyethylene nonylphenyl ether as an emulsifier, 0.3 parts by weight of ammonium polyoxyethylene nonylphenyl ether sulfate, and 100 parts by weight of water were charged into a reaction container equipped with a thermometer, a nitrogen gas introduction pipe, a condenser, and a stirring device, and emulsion polymerization was carried out. A 10 wt% aqueous ammonia solution was charged to adjust the pH to 8. An acrylic emulsion polymer (c) was obtained in this manner.

With the acrylic emulsion polymer (c) was mixed an oxazoline-based crosslinking agent (manufactured by NIPPON SHOKUBAI CO., LTD. under the product name "EPOCROS WS-500") in an amount of 1 part by weight with respect to 100 parts by weight of a nonvolatile component included in the acrylic emulsion polymer. An acrylic pressure-sensitive adhesive composition (c) was obtained in this manner.

The acrylic pressure-sensitive adhesive composition (c) was applied to a 55 μm-thick polyethylene (PE) film substrate so that the thickness after drying would be 6 μm. The applied composition was dried at 80°C for 5 minutes to produce a pressure-sensitive adhesive tape (C).

[Example 1]

After the PET release liner was removed, the pressure-sensitive adhesive tape (A) obtained in Production Example 1 was charged into a pulverizer (SR360 manufactured by Horai Co., Ltd.) to produce a pulverized sample passing through a 3 mm-diameter screen.

An amount of 2.5 kg of the pulverized sample of the pressure-sensitive adhesive tape (A) was charged into a reactor of a planetary mixer (PLM15 manufactured by INOUE MFG., INC.), and then 0.39 kg of KOH was charged. Subsequently, stirring was started while the reactor was maintained under negative pressure.

After that, the jacket temperature was increased to 150°C. After 40 minutes of stirring, generation of vapor in the reactor was confirmed.

After a liquid (including vapor) generated in the reactor was recovered using a vacuum recovery device, the reactor was cooled until the internal temperature of the reactor fell below 50°C, and was then opened to the atmosphere, thereby recovering a solid mixture of a polyacrylic acid powder and a flaky PET substrate.

The recovered solid mixture was separated using a 1 mm-diameter sieve into the polyacrylic acid powder that can pass through this sieve and the flaky PET substrate that cannot pass through this sieve, and each of them were recovered.

The separated and recovered flaky PET substrate was washed with tap water and then dried with warm air at 60°C for two hours. Composition analysis was performed to determine the pressure-sensitive adhesive removal rate, which was found to be 74 wt%.

Additionally, the substrate recovery rate was determined to be 78 wt%.

Structural analysis of the separated and recovered polyacrylic acid powder by $^{13}C$ NMR (AVANCE III-600 having a cryoprobe and manufactured by Bruker BioSpin Group) revealed that the degree of carboxylation was 99%.

Moreover, GC/MS of the liquid (including vapor) recovered using the vacuum recovery device revealed that 2-ethylhexanol (2EHOH) was present as a main component.

Table 1 shows the results.

[Example 2]

After the PET release liner was removed, the pressure-sensitive adhesive tape (A) obtained in Production Example 1 was charged into a pulverizer (SR360 manufactured by Horai Co., Ltd.) to produce a pulverized sample passing through a 3 mm-diameter screen.

An amount of 86 g of the pulverized sample of the pressure-sensitive adhesive tape (A) was charged into a 1 L separable flask, and then 12.8 g of KOH was charged. Subsequently, stirring with an anchor blade was started while the reactor was maintained under negative pressure.

The separable flask was set in a heater at 150°C, and then the temperature was increased. After 25 minutes of stirring, generation of vapor in the reactor was confirmed.

After the vapor generated in the reactor was recovered with a trap, the reactor was cooled until the temperature in the reactor fell below 50°C, and was then opened to the atmosphere, thereby recovering a solid mixture of a polyacrylic acid powder and a flaky PET substrate.

The recovered solid mixture was charged into water to be separated into a water-soluble component and a water-insoluble component.

The flaky PET substrate separated and recovered as the water-insoluble component was washed with tap water and then dried with warm air at 60°C for two hours. Composition analysis was performed to determine the pressure-sensitive adhesive removal rate, which was found to be 16 wt%.

Additionally, the substrate recovery rate was determined to be 79 wt%.

Structural analysis of the polyacrylic acid separated and recovered as the water-soluble component by $^{13}C$ NMR (AVANCE III-600 having a cryoprobe and manufactured by Bruker BioSpin Group) revealed that the degree of carboxylation was 99%.

Moreover, GC/MS of the liquid recovered with the trap revealed that 2-ethylhexanol (2EHOH) was present as a main component.

Table 1 shows the results.

[Example 3]

After the PET release liner was removed, the pressure-sensitive adhesive tape (A) obtained in Production Example 1 was charged into a pulverizer (SR360 manufactured by Horai Co., Ltd.) to produce a pulverized sample passing through a 3 mm-diameter screen.

An amount of 86 g of the pulverized sample of the pressure-sensitive adhesive tape (A) was charged to a 1 L separable flask, and then 9.6 g of KOH was charged. Subsequently, stirring was started with an anchor blade while the reactor was maintained under negative pressure.

The separable flask was set in a heater at 150°C, and then the temperature was increased. After 30 minutes of stirring, generation of vapor in the reactor was confirmed.

After the vapor generated in the reactor was recovered with a trap, the reactor was cooled until the temperature in the reactor fell below 50°C, and was then opened to the atmosphere, thereby recovering a solid mixture of a polyacrylic acid powder and a flaky PET substrate.

The recovered solid mixture was charged into water to be separated into a water-soluble component and a water-insoluble component.

The flaky PET substrate separated and recovered as the water-insoluble component was washed with tap water and then dried with warm air at 60°C for two hours. Composition analysis was performed to determine the pressure-sensitive adhesive removal rate, which was found to be 15 wt%.

Additionally, the substrate recovery rate was determined to be 77 wt%.

Structural analysis of the polyacrylic acid separated and recovered as the water-soluble component by $^{13}C$ NMR (AVANCE III-600 having a cryoprobe and manufactured by Bruker BioSpin Group) revealed that the degree of carboxylation was 99%.

Moreover, GC/MS of the liquid recovered with the trap revealed that 2-ethylhexanol (2EHOH) was present as a main component.

Table 1 shows the results.

[Example 4]

After the PET release liner was removed, the pressure-sensitive adhesive tape (A) obtained in Production Example 1 was charged into a pulverizer (SR360 manufactured by Horai Co., Ltd.) to produce a pulverized sample passing through a 3 mm-diameter screen.

An amount of 86 g of the pulverized sample of the pressure-sensitive adhesive tape (A) was charged to a 1 L separable flask, and then 8.0 g of NaOH was charged. Subsequently, stirring was started with an anchor blade while the reactor was maintained under negative pressure.

The separable flask was set in a heater at 150°C, and then the temperature was increased. After 40 minutes of stirring, generation of vapor in the reactor was not able to be visually confirmed.

The pressure in the reactor was reduced under the presence of a trap, thereby recovering a tiny amount of a liquid. The reactor was cooled until the temperature in the reactor fell below 50°C, and was then opened to the atmosphere, thereby recovering a solid mixture of a polyacrylic acid powder and a flaky PET substrate.

The recovered solid mixture was charged into water to be separated into a water-soluble component and a water-insoluble component.

The flaky PET substrate separated and recovered as the water-insoluble component was washed with tap water and then dried with warm air at 60°C for two hours. Composition analysis was performed to determine the pressure-sensitive adhesive removal rate, which was found to be 11 wt%.

Additionally, the substrate recovery rate was determined to be 80 wt%.

Structural analysis of the polyacrylic acid separated and recovered as the water-soluble component by $^{13}C$ NMR (AVANCE III-600 having a cryoprobe and manufactured by Bruker BioSpin Group) revealed that the degree of carboxylation was 99%.

Moreover, GC/MS of the liquid recovered with the trap revealed that 2-ethylhexanol (2EHOH) was present as a main component.

Table 1 shows the results.

[Example 5]

After the PET release liner was removed, the pressure-sensitive adhesive tape (A) obtained in Production Example 1 was charged into a pulverizer (SR360 manufactured by Horai Co., Ltd.) to produce a pulverized sample passing through a 3 mm-diameter screen.
An amount of 86 g of the pulverized sample of the pressure-sensitive adhesive tape (A) was charged to a 1 L separable flask, and then 9.6 g of KOH was charged. Subsequently, stirring was started with an anchor blade without creating negative pressure inside the reactor.
The separable flask was set in a heater at 150°C, and then the temperature was increased. After 30 minutes of stirring, generation of vapor in the reactor was confirmed.
The vapor generated in the reactor was recovered with a trap. The reactor was cooled until the temperature in the reactor fell below 50°C, thereby recovering a wet solid mixture of polyacrylic acid wetted with a liquid and a flaky PET substrate.
The recovered wet mixture was placed in a reduced-pressure dryer and dried under reduced pressure at 100°C. A liquid and a solid mixture were thus separated and recovered.
The separated and recovered solid mixture was charged into water to be separated into a water-soluble component and a water-insoluble component.
The flaky PET substrate separated and recovered as the water-insoluble component was washed with tap water and then dried with warm air at 60°C for two hours. Composition analysis was performed to determine the pressure-sensitive adhesive removal rate, which was found to be 10 wt%.
Additionally, the substrate recovery rate was determined to be 70 wt%.
Structural analysis of the polyacrylic acid separated and recovered as the water-soluble component by $^{13}$C NMR (AVANCE III-600 having a cryoprobe and manufactured by Bruker BioSpin Group) revealed that the degree of carboxylation was 99%.
Moreover, GC/MS of the liquid recovered with the trap revealed that 2-ethylhexanol (2EHOH) was present as a main component.
Table 1 shows the results.

[Example 6]

The pressure-sensitive adhesive tape (A) obtained in Production Example 1 was charged into a pulverizer (RC250 manufactured by YOSHIKOH) to produce a pulverized sample passing through a 6 mm-diameter screen.
An amount of 2.0 kg of the pulverized sample of the pressure-sensitive adhesive tape (A) was charged into a reactor of a 15 L trimix (TX-15 manufactured by INOUE MFG., INC.), and then 0.2 kg of KOH was charged. Subsequently, the pressure was reduced to -0.03 MPa, and the release liner was peeled off by stirring at room temperature for 10 minutes to cause the KOH to adhere to the surface of the pressure-sensitive adhesive.
After that, the pressure was returned to ordinary pressure, and 0.2 kg of 2-ethylhexanol (2EHOH) was charged. The temperature of a jacket part of the trimix was increased to 80°C, and stirring was performed for 70 minutes. After that, the pressure in the reactor was reduced for 10 minutes to recover the 2-ethylhexanol (2EHOH) charged and a liquid generated by the reaction between the pressure-sensitive adhesive and the KOH.
The reactor was cooled until the temperature in the reactor fell below 50°C, and then a wet mixture of polyacrylic acid wetted with the liquid and a flaky PET film (derived from the PET substrate and the PET release liner) was recovered.
Water was added in an amount of 20 parts by weight to 1 part by weight of the recovered wet substance and mixed therewith, followed by stirring and washing with a stirrer at 50°C overnight to separate the mixture into a water-soluble component and a water-insoluble component.
The flaky PET film (derived from the PET substrate and the PET release liner) separated and recovered as the water-insoluble component was washed with tap water and then dried with warm air at 60°C for two hours. Composition analysis was performed to determine the pressure-sensitive adhesive removal rate, which was found to be 94 wt%.
Additionally, the substrate/release liner recovery rate was determined to be 93 wt%.
Structural analysis of the polyacrylic acid separated and recovered as the water-soluble component by $^{13}$C NMR (AVANCE III-600 having a cryoprobe and manufactured by Bruker BioSpin Group) revealed that the degree of carboxylation was 99%.
GC/MS of the recovered liquid revealed that 2-ethylhexanol (2EHOH) was present as a main component.
Table 1 shows the results.

[Example 7]

The pressure-sensitive adhesive tape (A) obtained in Production Example 1 was charged into a pulverizer

(RC250 manufactured by YOSHIKOH) to produce a pulverized sample passing through a 10 mm-diameter screen.

An amount of 2.5 kg of the pulverized sample of the pressure-sensitive adhesive tape (A) was charged into a 15 L planetary mixer (PLX-15 manufactured by INOUE MFG., INC.) having a reactor heated to an internal temperature of at 80°C, and 0.24 kg of KOH was charged. Subsequently, the release liner was peeled off by stirring for five minutes at ordinary pressure to cause the KOH to adhere to the surface of the pressure-sensitive adhesive.

After that, 0.24 kg of 2-ethylhexanol (2EHOH) was charged. The pressure in the reactor was reduced to -0.03 MPa, followed by stirring at 80°C for 75 minutes. Subsequently, the 2-ethylhexanol (2EHOH) charged and vapor generated by the reaction between the pressure-sensitive adhesive and the KOH were recovered under reduced pressure.

The reactor was cooled until the temperature in the reactor fell below 50°C, and then a wet mixture of polyacrylic acid wetted with a liquid and a flaky PET film (derived from the PET substrate and the PET release liner) was recovered.

Water was added in an amount of 20 parts by weight to 1 part by weight of the recovered wet substance and mixed therewith, followed by stirring and washing with a stirrer at 50°C overnight to separate the mixture into a water-soluble component and a water-insoluble component.

The flaky PET film (derived from the PET substrate and the PET release liner) separated and recovered as the water-insoluble component was washed with tap water and then dried with warm air at 60°C for two hours. Composition analysis was performed to determine the pressure-sensitive adhesive removal rate, which was found to be 96 wt%.

Additionally, the substrate/release liner recovery rate was determined to be 98 wt%.

Structural analysis of the polyacrylic acid separated and recovered as the water-soluble component by $^{13}C$ NMR (AVANCE III-600 having a cryoprobe and manufactured by Bruker BioSpin Group) revealed that the degree of carboxylation was 99%.

GC/MS of the recovered liquid revealed that 2-ethylhexanol (2EHOH) was present as a main component.

Table 1 shows the results.

[Example 8]

The pressure-sensitive adhesive tape (B) obtained in Production Example 2 was charged into a pulverizer (RC250 manufactured by YOSHIKOH) to produce a pulverized sample passing through a 6 mm-diameter screen.

An amount of 2.0 kg of the pulverized sample of the pressure-sensitive adhesive tape (B) was charged into a reactor of a 15 L trimix (TX-15 manufactured by INOUE MFG., INC.), and then 0.2 kg of KOH was charged. Subsequently, the release liner was peeled off by stirring at room temperature and ordinary pressure for 10 minutes to cause the KOH to adhere to the surface of the pressure-sensitive adhesive.

Next, 0.2 kg of 2-ethylhexanol (2EHOH) was charged, and the temperature of the reactor was increased to 80°C. The mixture was stirred for 70 minutes while the internal pressure was repeatedly reduced to ordinary pressure each time the internal pressure increased. Subsequently, the 2-ethylhexanol (2EHOH) charged and vapor generated by the reaction between the pressure-sensitive adhesive and the KOH were recovered under reduced pressure.

The reactor was cooled until the temperature in the reactor fell below 50°C, and then a wet mixture of polyacrylic acid wetted with the liquid and a flaky PET film (derived from the PET substrate and the PET release liner) was recovered.

An amount of 1 kg of the recovered wet substance and 5 kg of water were charged into the trimix, and were stirred and washed at room temperature for 15 minutes to be separated into a water-soluble component and a water-insoluble component.

The flaky PET film (derived from the PET substrate and the PET release liner) separated and recovered as the water-insoluble component was washed with tap water and then dried with warm air at 60°C for two hours. Composition analysis was performed to determine the pressure-sensitive adhesive removal rate, which was found to be 99 wt%.

Additionally, the substrate/release liner recovery rate was determined to be 94 wt%.

Structural analysis of the polyacrylic acid separated and recovered as the water-soluble component by $^{13}C$ NMR (AVANCE III-600 having a cryoprobe and manufactured by Bruker BioSpin Group) revealed that the degree of carboxylation was 99%.

GC/MS of the recovered liquid revealed that the liquid contained the charged 2-ethylhexanol (2EHOH) and ethanol (EtOH) derived from the pressure-sensitive adhesive.

Table 1 shows the results.

[Example 9]

The pressure-sensitive adhesive tape (B) obtained in Production Example 2 was charged into a pulverizer (RC250 manufactured by YOSHIKOH) to produce a pulverized sample passing through a 6 mm-diameter screen.

An amount of 2.0 kg of the pulverized sample of the pressure-sensitive adhesive tape (B) was charged into a reactor of a 15 L trimix (TX-15 manufactured by INOUE MFG., INC.), and then 0.2 kg of KOH was charged. Stirring was

then started at room temperature and ordinary pressure. The mixture was stirred for 10 minutes while the internal pressure was repeatedly reduced to ordinary pressure each time the internal pressure increased.

Subsequently, vapor generated by the reaction between the pressure-sensitive adhesive and the KOH was recovered under reduced pressure.

The reactor was cooled until the temperature in the reactor fell below 50°C, and then a wet mixture of polyacrylic acid wetted with the liquid and a flaky PET film (derived from the PET substrate and the PET release liner) was recovered.

Water was added in an amount of 20 parts by weight to 1 part by weight of the recovered wet substance and mixed therewith, followed by stirring and washing with a stirrer at 50°C overnight to separate the mixture into a water-soluble component and a water-insoluble component.

The flaky PET film (derived from the PET substrate and the PET release liner) separated and recovered as the water-insoluble component was washed with tap water and then dried with warm air at 60°C for two hours. Composition analysis was performed to determine the pressure-sensitive adhesive removal rate, which was found to be 81 wt%.

Additionally, the substrate/release liner recovery rate was determined to be 89 wt%.

Structural analysis of the polyacrylic acid separated and recovered as the water-soluble component by $^{13}C$ NMR (AVANCE III-600 having a cryoprobe and manufactured by Bruker BioSpin Group) revealed that the degree of carboxylation was 99%.

GC/MS of the recovered liquid revealed that the liquid contained ethanol (EtOH) derived from the pressure-sensitive adhesive.

Table 1 shows the results.

[Example 10]

The pressure-sensitive adhesive tape (C) obtained in Production Example 3 was charged into a pulverizer (RC250 manufactured by YOSHIKOH) to produce a pulverized sample passing through a 3 mm-diameter screen.

An amount of 2.0 kg of the pulverized sample of the pressure-sensitive adhesive tape (C) was charged into a 15 L trimix (TX-15 manufactured by INOUE MFG., INC.) having a reactor heated to an internal temperature of at 80°C, and 0.24 kg of KOH was charged. The mixture was stirred for 60 minutes while the internal pressure was repeatedly reduced to ordinary pressure each time the internal pressure increased.

Then, 0.20 kg of 1-butanol (BuOH) was charged, and the mixture was stirred for 20 minutes. While the temperature was maintained at 80°C, a vacuum valve was fully opened to reduce the internal pressure of the reactor to -0.1 MPa, and stirring was performed for 40 minutes under the reduced-pressure condition. Subsequently, the 1-butanol (BuOH) charged and a liquid generated by the reaction between the pressure-sensitive adhesive and the KOH were recovered.

The reactor was cooled until the temperature in the reactor fell below 50°C, and a mixture of polyacrylic acid and the polyethylene (PE) film substrate was recovered.

Water was added in an amount of 20 parts by weight to 1 part by weight of the recovered mixture and mixed therewith, followed by stirring and washing with a stirrer at 50°C overnight to separate the mixture into a water-soluble component and a water-insoluble component.

The polyethylene (PE) film substrate separated and recovered as the water-insoluble component was washed with tap water and then dried with warm air at 60°C for two hours. Composition analysis was performed to determine the pressure-sensitive adhesive removal rate. Since a residual component of the pressure-sensitive adhesive was found to be below the detection limit, and the pressure-sensitive adhesive removal rate was 100 wt%.

Additionally, the substrate recovery rate was determined to be 99 wt%.

Structural analysis of the polyacrylic acid separated and recovered as the water-soluble component by $^{13}C$ NMR (AVANCE III-600 having a cryoprobe and manufactured by Bruker BioSpin Group) revealed that the degree of carboxylation was 90%.

GC/MS of the recovered liquid revealed that the liquid contained 1-butanol (BuOH).

Table 1 shows the results.

[Table 1]

| | Pressure-sensitive adhesive tape | Release liner | Substrate/ Release liner | | Alkaline compound | | Addition of organic solvent | | |
|---|---|---|---|---|---|---|---|---|---|
| | | | Type | Amount (g) | Type | Amount (g) | Type | Addition amount with respect to 100 parts by weight of alkaline compound (parts by weight) | Addition amount with respect to 100 parts by weight of pressure-sensitive adhesive tape (part by weight) |
| Ex. 1 | (A) | Without | PET/- | 2500 | KOH | 390 | - | - | - |
| Ex. 2 | (A) | Without | PET/- | 86 | KOH | 12.8 | - | - | - |
| Ex. 3 | (A) | Without | PET/- | 86 | KOH | 9.6 | - | - | - |
| Ex. 4 | (A) | Without | PET/- | 86 | NaOH | 8.0 | - | - | - |
| Ex. 5 | (A) | Without | PET/- | 86 | KOH | 9.6 | - | - | - |
| Ex. 6 | (A) | With | PET/PET | 2000 | KOH | 200 | 2EHOH | 100 | 10 |
| Ex. 7 | (A) | With | PET/PET | 2500 | KOH | 240 | 2EHOH | 100 | 9.6 |
| Ex. 8 | (B) | With | PET/PET | 2000 | KOH | 200 | 2EHOH | 100 | 10 |
| Ex. 9 | (B) | With | PET/PET | 2000 | KOH | 200 | - | - | - |
| Ex. 10 | (C) | Without | PE/- | 2000 | KOH | 240 | BuOH | 83 | 10 |

| | Kneading step | | Pressure-sensitive adhesive removal rate (%) | Degree of carboxylation (%) | Substrate/Release liner recovery rate (wt%) | Type of recovered alcohol |
|---|---|---|---|---|---|---|
| | Kneading device | Diameter ratio B1/D1 of stirring blade/reactor | | | | |
| Ex. 1 | Planetary mixer | 0.9 | 74 | 99 | 78 | 2EHOH |
| Ex. 2 | Anchor blade | 0.6 | 16 | 99 | 79 | 2EHOH |
| Ex. 3 | Anchor blade | 0.6 | 15 | 99 | 77 | 2EHOH |
| Ex. 4 | Anchor blade | 0.6 | 11 | 99 | 80 | 2EHOH |
| Ex. 5 | Anchor blade | 0.6 | 10 | 99 | 70 | 2EHOH |
| Ex. 6 | Trimix | 1.4 | 94 | 99 | 93 | 2EHOH |
| Ex. 7 | Planetary mixer | 0.9 | 96 | 99 | 98 | 2EHOH |
| Ex. 8 | Trimix | 1.4 | 99 | 99 | 94 | 2EHOH<br>EtOH |
| Ex. 9 | Trimix | 1.4 | 99 | 99 | 89 | EtOH |

(continued)

| | Kneading step | | Pressure-sensitive adhesive removal rate (%) | Degree of carboxylation (%) | Substrate/Release liner recovery rate (wt%) | Type of recovered alcohol |
|---|---|---|---|---|---|---|
| | Kneading device | Diameter ratio B1/D1 of stirring blade/reactor | | | | |
| Ex. 10 | Trimix | 0.6 | 100 | 90 | 99 | BuOH |

INDUSTRIAL APPLICABILITY

The laminate recycling method according to the embodiment of the present invention can be suitably used, for example, in techniques for recycling pressure-sensitive adhesive tape.

## Claims

1. A laminate recycling method for recovering, from a laminate including a functional layer and a substrate, a resin derived from the functional layer and a resin derived from the substrate, wherein
the laminate and an alkali compound are brought into contact with each other in a solid state.

2. The laminate recycling method according to claim 1, wherein an organic solvent is added to a mixture including the laminate and the alkali compound after the contact.

3. The laminate recycling method according to claim 2, wherein the organic solvent is an alcohol.

4. The laminate recycling method according to claim 1, wherein kneading of a mixture including the laminate and the alkali compound is performed.

5. The laminate recycling method according to claim 4, wherein the kneading is performed using a kneading device configured to knead the mixture including the laminate and the alkali compound by applying a shear force to the mixture.

6. The laminate recycling method according to claim 5, wherein

    the kneading device includes a stirring blade and a reactor, and
    a ratio B1/D1 of a diameter B1 (mm) of the stirring blade to a diameter R1 (mm) of the reactor is 0.5 or more.

7. The laminate recycling method according to claim 4, wherein the kneading is at least partially performed under reduced pressure.

8. The laminate recycling method according to claim 1, comprising a separation step of separating the resin derived from the functional layer and the resin derived from the substrate.

9. The laminate recycling method according to claim 8, wherein

    the separation step performs separation using a filter,
    90 wt% or more of the resin derived from the functional layer passes through the filter, and
    90 wt% or more of the resin derived from the substrate does not pass through the filter.

10. The laminate recycling method according to claim 8, wherein

    the separation step performs separation using solubility in a liquid,
    90 wt% or more of the resin derived from the functional layer dissolves in the liquid, and
    90 wt% or more of the resin derived from the substrate does not dissolve in the liquid.

11. The laminate recycling method according to claim 1, wherein

the functional layer is formed of an acrylic pressure-sensitive adhesive, and
the resin derived from the functional layer is a hydrophilic polymer.

**12.** The laminate recycling method according to claim 4, wherein an alcohol is generated in the kneading.

**13.** The laminate recycling method according to claim 12, comprising an alcohol recovery step of recovering the alcohol generated in the kneading.

**14.** The laminate recycling method according to claim 13, wherein the alcohol recovery step recovers, under reduced pressure, the alcohol generated in the kneading.

## INTERNATIONAL SEARCH REPORT

International application No. **PCT/JP2024/036598**

**A. CLASSIFICATION OF SUBJECT MATTER**

***B29B 17/02***(2006.01)i; ***C08J 11/16***(2006.01)i; ***C09J 7/38***(2018.01)i; ***C09J 133/04***(2006.01)i
FI: B29B17/02; C09J133/04; C08J11/16; C09J7/38 ZAB

According to International Patent Classification (IPC) or to both national classification and IPC

**B. FIELDS SEARCHED**

Minimum documentation searched (classification system followed by classification symbols)

B29B17/02; C08J11/16; C09J7/38; C09J133/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2006-045372 A (TEIJIN CHEM LTD.) 16 February 2006 (2006-02-16) paragraphs [0001]-[0082] | 1-14 |
| Y | JP 2023-054113 A (NITTO DENKO CORPORATION) 13 April 2023 (2023-04-13) paragraphs [0001]-[0249] | 1-14 |
| Y | JP 2002-282731 A (OSADA GIKEN KK) 02 October 2002 (2002-10-02) paragraphs [0001]-[0029], fig. 1-2 | 1-14 |
| A | JP 7-256639 A (TEIJIN LIMITED) 09 October 1995 (1995-10-09) paragraphs [0001]-[0031] | 1-14 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 November 2024** | **10 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/036598**

| Patent document cited in search report | Publication date (day/month/year) | Patent family member(s) | Publication date (day/month/year) |
|---|---|---|---|
| JP 2006-045372 A | 16 February 2006 | (Family: none) | |
| JP 2023-054113 A | 13 April 2023 | US 2023/0242732 A1<br>paragraphs [0001]-[0257]<br>WO 2022/004609 A1<br>EP 4174123 A1<br>JP 2023-105258 A<br>JP 2023-129729 A<br>CN 115996976 A | |
| JP 2002-282731 A | 02 October 2002 | US 2002/0179424 A1<br>paragraphs [0001]-[0072], fig. 1-2<br>EP 1252940 A2 | |
| JP 7-256639 A | 09 October 1995 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021175796 A
- JP 2020090094 A
- JP 2021160350 A